Europäisches Patentamt

European Patent Office

Office européen des brevets

(11) Veröffentlichungsnummer: **0 062 105**
**B1**

(12) **EUROPÄISCHE PATENTSCHRIFT**

(45) Veröffentlichungstag der Patentschrift:
**02.05.85**

(21) Anmeldenummer: **81108933.3**

(22) Anmeldetag: **26.10.81**

(51) Int. Cl.⁴: **H 02 K 15/02,** B 65 G 59/02,
B 65 G 59/06, B 65 H 3/30,
B 66 C 1/54

(54) **Aufnahme-, Transport- und Dosiervorrichtung für Kurzschlussläufer-Blechpakete.**

(30) Priorität: **03.04.81 DE 3113623**

(43) Veröffentlichungstag der Anmeldung:
**13.10.82 Patentblatt 82/41**

(45) Bekanntmachung des Hinweises auf die Patenterteilung:
**02.05.85 Patentblatt 85/18**

(84) Benannte Vertragsstaaten:
**FR SE**

(56) Entgegenhaltungen:
**US - A - 3 006 062**
**US - A - 3 006 062**
**US - A - 3 926 320**
**US - A - 3 926 320**
**US - A - 3 997 067**
**US - A - 3 997 067**
**US - A - 4 079 512**
**US - A - 4 079 512**

(73) Patentinhaber: **Siemens Aktiengesellschaft, Berlin und München Wittelsbacherplatz 2, D-8000 München 2 (DE)**

(72) Erfinder: **Powilleit, Siegfried, Taubenweg 24b, D-8510 Fürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Aufnahme-, Transport- und Dosiervorrichtung für Kurzschlussläufer-Blechpakete nach dem Oberbegriff des Patentanspruchs 1.

Bisher hat man zur Herstellung von Kurzschlussläufern mit gegossenen Kurzschlusskäfigen die Einzelbleche teilpaketweise auf einen Schichtdorn von Hand aufgebracht und die Einzelbleche an Richtleisten kantenrein ausgerichtet, um eine notwendige geometrische Ordnung des Läuferblechpaketes vor dem Einbringen in das Giesswerk zu erreichen. Für die Abnahme der Blechteilpakete von einem Palettenvorratsstapel von Hand, den Transport zum Schichtdorn und das Ausrichten der Einzelbleche am Schichtdorn ist ein erheblicher Kraft- und Zeitaufwand unvermeidlich, der einer weitergehend mechanisierten Fertigung solcher Kurzschlussläufer hinderlich ist, zumal auch bei kantenrein ausgerichteten Einzelblechen in den Palettenstapeln beim Transport und Aufbringen der Blechteilpakete auf den Schichtdorn zumindest die Blechteilpakete wiederum zueinander kantenrein ausgerichtet werden müssen.

Der Erfindung liegt die Aufgabe zugrunde, den persönlichen Transport von Blechteilpaketen und deren erneutes Ausrichten am Schichtdorn überflüssig zu machen und eine weitgehend mechanisierte Umsetzung der ausgerichteten Blechpakete vom Palettenstapel zum Schichtdorn unter Fortfall der Notwendigkeit einer erneuten kantenreinen Ausrichtung der Einzelbleche am Schichtdorn zu ermöglichen und jeweils Blechteilpakete gleicher Schichthöhe, gegebenenfalls in bestimmter Weise gegeneinander verdreht, allein durch ihre Schwerkraft dem Schichtdorn zuzuführen.

Die Lösung der gestellten Aufgabe gelingt mit einer Vorrichtung der eingangs genannten Art durch die Massnahmen nach dem Kennzeichen des Patentanspruchs 1.

Bei eingefahrenen Rast- und Klemmkörpern wird der Dosierdorn in den auf einer Palette kantenrein ausgerichteten Blechstapel soweit eingesenkt, dass die Oberkante der Rastkörper unterhalb des untersten Blechstapels ausgestellt werden kann. Der beladene Dosierdorn wird dann über den Schichtdorn transportiert und auf diesen fluchtend abgesenkt, bis sein Mundstück formschlüssig mit der Oberseite des Schichtdornes in Eingriff steht. Danach wird durch Ausstellen der Klemmkörper und Einfahren der Rastkörper das zwischen diesen befindliche Blechteilpaket durch eigene Schwerkraft dem Schichtdorn zugeführt. Danach werden die Rastkörper wieder ausgestellt und die Klemmkörper gelöst, so dass sich das restliche Blechpaket auf die Rastkörper absenkt. Alsdann wiederholt sich der beschriebene Betätigungsvorgang so oft, bis der Schichtdorn mit dem erforderlichen Blechpaket beschichtet ist. Bei entsprechender Einstellung der Abstände zwischen Oberkante Rastkörper und Unterkante Klemmkörper können jeweils gewünschte hohe Blechteilpakete zugeführt werden, die so hoch bemessen sein können, dass sie einen ganzzahligen Bruchteil der Gesamthöhe des gewünschten Blechpaketes ausmachen. Wenn notwendig, kann der Dosierdorn für die verdrehte Zuführung solcher Blechteilpakete vorher vom Schichtdorn entkuppelt, gedreht und danach wieder mit diesem formschlüssig durch Absenken gekuppelt werden. Das fertige Blechpaket kann gegebenenfalls durch Auflegen oder Abnehmen von Einzelblechen auf die genaue Blechpakethöhe gebracht werden. Die Bedienungsperson ist dabei nur mit der Betätigung des Hebezeuges und der abwechselnden Verstellung der Rast- und Klemmkörper des Dosierdornes befasst und von körperlichen Anstrengungen befreit.

Vorteilhafte Ausgestaltungen der Erfindung sind Gegenstand zusätzlicher Ansprüche.

Die Verstellorgane für die Rast- und Klemmkörper können Hebelantriebe, Zahnradantriebe usw. sein, die auf engem Raum eine ausreichend starke Verstellkraft bei ausreichenden Verstellwegen ergeben, wobei die Verstellorgane mit ihren Rast- bzw. Klemmkörpern form- und/oder kraftschlüssig gekoppelt sein können, wie dies bei passend im Dornkörper des Dosierdornes begrenzt beweglich geführten Verstellkörpern besonders vorteilhaft erreicht werden kann, insbesondere wenn beide Verstellkörper in Dornlängsrichtung im Dornkörper bzw. ineinander begrenzt verschieblich gelagert sind.

Ein Ausführungsbeispiel der Erfindung ist in der Zeichnung zum Teil schematisch dargestellt und nachfolgend näher erläutert. Es zeigt:

Fig. 1 den zum Einfahren in ein palettengestapeltes Blechpaket ausgerichteten Dosierdorn;

Fig. 2 den mittels eines Hebezeuges auf den Schichtdorn aufgesetzten beladenen Dosierdorn;

Fig. 3 einen teilweisen Längsschnitt durch den Dosierdorn im aufgesetzten Zustand, wobei links der Dornlängsachse eine Schiebehülse mit Hebelübertragung und rechts eine solche mit Formschlusskopplung für die Klemmkörper und der in der Schiebehülse geführte Schieber ungeschnitten dargestellt ist,

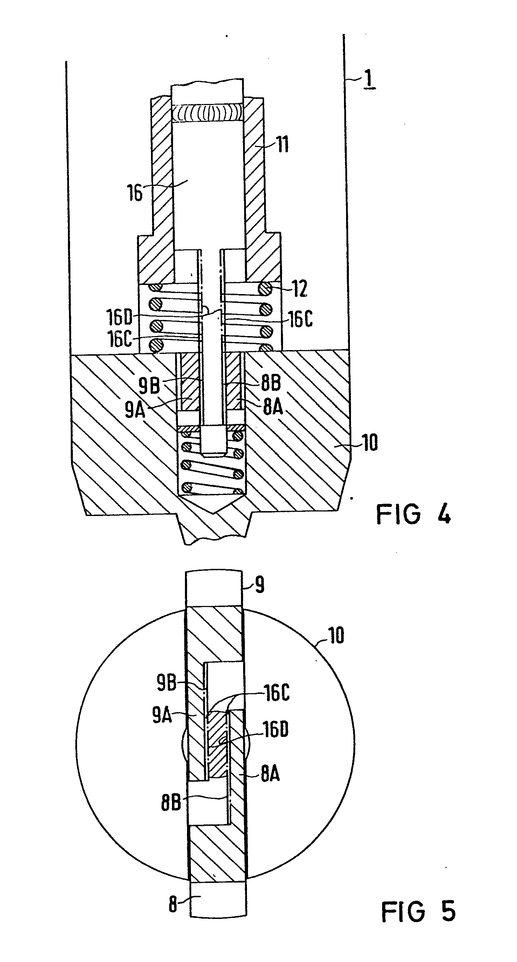

Fig. 4 einen senkrecht zur Zeichenebene der Fig. 3 gerichteten teilweisen Längsschnitt des Dosierdornes und

Fig. 5 einen Querschnitt nach der Linie A–A der Fig. 4.

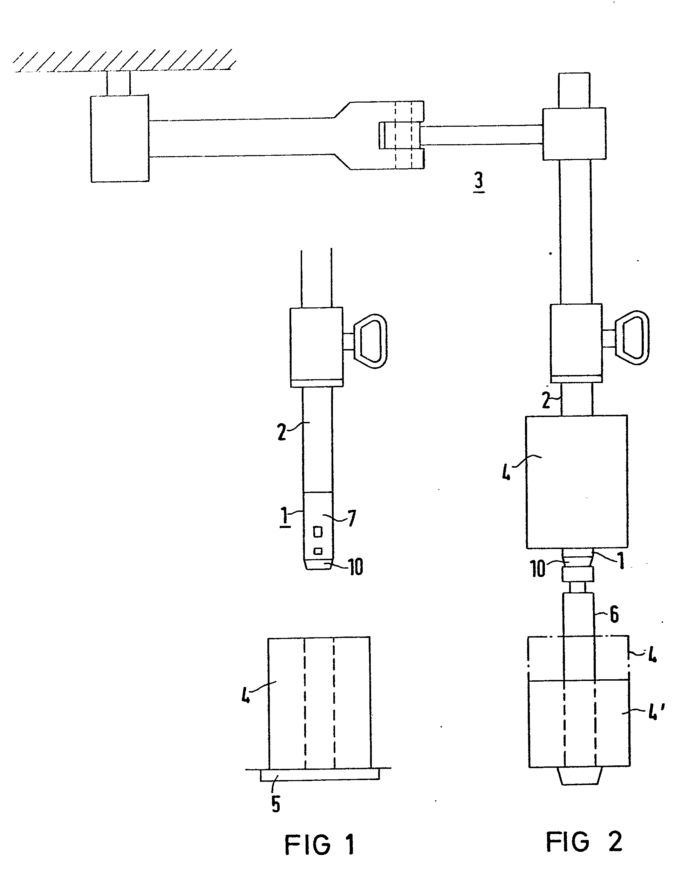

Gemäss Fig. 1 und 2 ist der Dosierdorn 1 mit seinem Anschlussflansch 2 mit dem Hebezeug 3 gekoppelt und kann mit eingefahrenen Klemm- und Rastkörpern in den kantenrein auf einer Palette 5 gestapelten Blechstapel 4 soweit abgesenkt werden, dass die Rastkörper unterhalb des Blechstapels ausgefahren und dieser von der Palette abgehoben und über dem Schichtdorn 6 fluchtend auf diesen aufgesetzt werden kann. Durch Anpressen der Klemmkörper und Einfahren der Rastkörper können Blechteilpakete bestimmter Höhe durch Schwerkraft auf den Schichtdorn 6 gebracht werden, bis die gewünschte Höhe des Blechpaketes 4' erreicht ist, die auch der gesamte aufgenommene Blechstapel sein kann. Zur formschlüssigen Kupplung des Dosierdornes 1 mit dem Schichtdorn 6 dient ein Mundstück 10 des Dosierdornes, das mit dem eigentlichen Dornkörper ebenso wie der Anschlussflansch 2 lösbar verbunden ist.

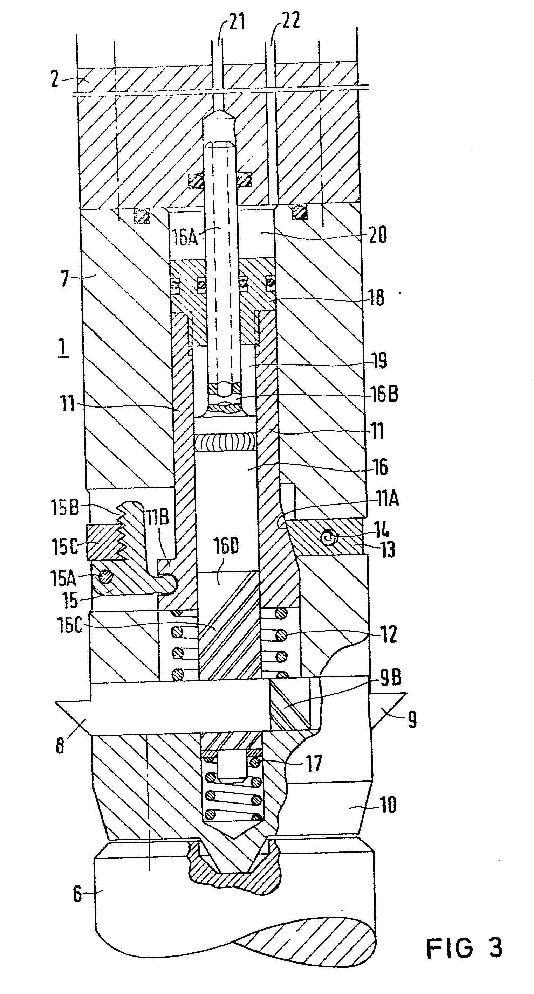

Gemäss Fig. 3 ist der prismatische Dornkörper 7 mit rundem Querschnitt, der entsprechend der Mittellochung der Einzelbleche bemessen und gegebenenfalls auch eckig sein kann, mit einer sich in der Längsachse erstreckenden Mittenausnehmung für die verschiebliche Lagerung eines Trennkolbens 18 zwischen dem oben abschliessenden Anschlussflansch 2 mitsamt einer in der Mittenausnehmung gelagerten Schiebehülse 11 versehen. Die besagte Mittenausnehmung ist im unteren Abschnitt des Dornkörpers 7 erweitert und steht mit Durchbrechungen für die Aufnahme von Klemmkörpern 13 bzw. 15 in Verbindung. Die erweiterte Mittenausnehmung ist von dem Mundstück 10 überdeckt, zwischen dem und der unteren Stirnfäche der Schiebehülse 11 eine Spiraldruckfeder 12 eingespannt ist. Innerhalb der erweiterten Mittenausnehmung hat die Schiebehülse entweder an zwei diametralen Stellen schiefe Aussenflächen 11A, die mit federgefesselten (14) Klemmklötzen 13 form- und kraftschlüssig in Eingriff stehen, oder Vorsprünge 11B mit Kugelpfannen zur Kopplung mit Klemmhebeln 15, die um je eine Schwenkachse 15A verschwenkbar sind und mit Aussenrippen 15B axial verstellbar mit innenverrippten Klemmknaggen in Eingriff gehalten sind.

Diese Klemmklötze 13 bzw. Klemmhebel 15 mit den Klemmknaggen 15C werden bei Aufwärtsbewegung der Schiebehülse 11 nach aussen aus dem Dornkörper 7 ausgefahren durch die Federkraft der Spiraldruckfeder 12, wenn der Druckraum 20 oberhalb des Trennkolbens 18 nach aussen freigemacht wird, indem die Druckmittelzufuhr über eine Druckmittelleitung 22 im Anschlussflansch 2 von der Druckquelle abgeschaltet und mit der Atmosphäre verbunden wird.

Zur Verstellung der diametral angeordneten Raststifte 8, 9, die in dem Mundstück 10 geführt und abgestützt sind, dient ein kolbenförmiger Schieber 16, der die Schiebehülse 11 abdichtend durchsetzt und mit seiner den Trennkolben 18 abdichtend durchdringenden Führungsstange 16A in eine Sacköffnung im Anschlussflansch 2 reicht. Die Führungsstange hat eine bis in die Druckkammer 19 unterhalb des Trennkolbens 18 reichenden Kanal 16B, der mit einer zweiten Druckmittelleitung 21 verbunden ist, über die wahlweise eine Verbindung mit der Druckquelle bzw. der Atmosphäre herstellbar ist. Das aus der Schiebehülse 11 nach unten ragende Ende des Schiebers 16 weist zwei flache Seitenwände 16D auf und stützt sich über eine zweite Spiraldruckfeder 17 in einer Sacköffnung des Mundstückes 10 gegen das Mundstück ab, so dass bei entlasteter Druckkammer 19 diese Spiraldruckfeder 17 den Schieber 16 nach oben verstellt. Da die flachen Seitenwände 16D schräge Zahnkeile 16C aufweisen, die mit entsprechend schrägen Zahnkeilen 8B, 9B an den flachen Seitenwänden 8A, 9A der Raststifte 8, 9 in Eingriff stehen, werden bei der Aufwärtsverstellung des Schiebers 16 die Raststifte in die gezeigte ausgefahrene Stellung gebracht. Es ist also bei Wegfall des Druckmediums, d. h. bei Ruhezustand der Verstellorgane, dafür gesorgt, dass die Spiraldruckfedern die Klemm- und Rastkörper in die ausgestellte Position bringen und dort halten, bis durch Zuführung von Druckmedium zu der Druckkammer 20 die Schiebehülse 11 durch Abwärtsverschieben gegen die Federkraft die Klemmkörper einzieht bzw. durch Druckmediumzuführung zu der Druckkammer 19 der gegen seine Federkraft abwärts bewegte Schieber 16 die Rastkörper nach innen in den Dornkörper versenkt.

Durch abwechselnde Druckmittelzufuhr zu den Kammern 19 bzw. 20 werden die Blechteilpakete nach unten freigegeben und dabei die oberhalb der ausgefahrenen Klemmkörper befindlichen Blechteilpakete arretiert, solange bis durch Ausfahren der Rastkörper und Entlastung der Klemmkörper ein weiteres Blechteilpaket auf die Rastkörper abgesenkt werden kann.

Bei der Druckmittelzufuhr zur Kammer 19 wird der Schieber 16 nach unten und gleichzeitig der Trennkolben 18 samt Schiebehülse 11 nach oben verschoben, so dass eine Verstärkung der Klemmkraft erfolgt.

## Patentansprüche

1. Aufnahme-, Transport- und Dosiervorrichtung für Kurzschlussläufer-Blechpakete von kantenrein ausgerichteten mittengelochten Einzelblechen eines Vorratsblechstapels (4) zum Beschicken eines Schichtdornes (6) für ein kantenreines Blechpaket für eine Maschine, das im zusammengepressten Zustand in ein Giesswerkzeug für den Kurzschlusskäfig bringbar ist, dadurch gekennzeichnet, dass ein mittels eines Hebezeuges (3) in den Vorratsblechstapel durch sein Eigengewicht einsenkbarer und mit diesem beladen über ein Mundstück (10) auf den Schichtdorn (6) formschlüssig kantenrein koppelbar aufsetzbarer Dosierdorn (1) oberseitig mit seinem Anschlussflansch (2) verdrehbar mit dem Hebezeug (3) verbunden ist und in seinem unteren Endbereich mindestens zwei versenkt angeordnete, gegensinnig in einer senkrecht zur Dornlängsachse gerichteten Ebene gemeinsam ausbringbare Rastkörper (8, 9) für das jeweils unterste Einzelblech des Vorratsblechstapels und im axialen Abstand darüber mindestens zwei versenkt angeordnete in einer dazu parallelen Ebene gemeinsam ausstellbare Klemmkörper (14, 15) für den jeweiligen darüber angeordneten Rest des Vorratsblechstapels aufweist und die Rast- und Klemmkörper jeweils mit innerhalb des Dosierdornes angeordneten, je für sich von aussen betätigbaren Verstellorganen (11, 16) gekoppelt sind.

2. Vorrichtung nach Anspruch 1, dadurch gekennzeichnet, dass das Verstellorgan (16) für die Rastkörper (8, 9) im Verstellorgan (11) für die Klemmkörper (14, 15) und dieses seinerseits im Dosierdorn (1) begrenzt beweglich geführt ist und die Verstellorgane mit ihren Rast- bzw. Klemmkörpern form- und/oder kraftschlüssig gekoppelt sind.

3. Vorrichtung nach Anspruch 1 oder 2, dadurch gekennzeichnet, dass die Verstellorgane (11, 16) jeweils axial verschieblich geführt und an ihren unteren Stirnseiten mit im Dosierdorn abgestützten Druckfedern (12, 17) in Eingriff stehen, die die entlasteten Verstellorgane in ihren oberen Endstellungen halten, bei denen die Rastkörper (8, 9) und die Klemmkörper (14, 15) aus dem Dosierdorn (1) ragen.

4. Vorrichtung nach einem der vorhergehenden Ansprüche, dadurch gekennzeichnet, dass der Dosierdorn (1) aus dem durch den Anschlussflansch (2) und das Mundstück (10) einseitig abgeschlossenen Dornkörper (7) besteht, der in seinem oberen Abschnitt einen durch den lösbar befestigten Abschlussflansch abgeschlossenen zylindrischen Aufnahmeraum für einen beidseitig druckmittelbeaufschlagbaren, verschieblich angeordneten Trennkolben (18) und darunter einen zylindrischen Teil der axial gegen ihre Druckfeder (12) verschiebliche Schiebehülse (11) aufweist, in der unterhalb des Trennkolbens (18) der gegen seine Druckfeder (17) axial verschiebliche kolbenförmige Schieber (16) abgedichtet angeordnet ist, der an seinen unteren abgeflachten Seitenwänden (16D) schräggerichtete Zahnkeile (8B, 9B) aufweist, die mit passend schräggerichteten Zahnkeilen (8B, 9B) an flachen Seitenwänden (8A, 9A) von quer im unteren Abschnitt des Dornkörpers (7) verschieblichen Raststiften (8, 9) form- und kraftschlüssig gekoppelt sind, dass der untere Aussenbereich der Schiebehülse (11) mit den Klemmkörpern (14, 15) form- und/oder kraftschlüssig gekoppelt ist und dass unterhalb der Raststifte (8, 9) das die Rastkörper führende, am Dornkörper (7) lösbar befestigte Mundstück (10) zum verdrehungsgesicherten Aufsetzen auf den Schichtdorn (6) angeordnet ist, das den Aufnahmeraum für die Schiebehülse (11) und den Schieber (16) nach unten abschliesst und den Aufnahmeraum für die mit dem Schieber (16) in Eingriff stehende, als Spiralfeder (17) ausgebildete erste Druckfeder enthält, sowie eine zentrische Stirnauflagefläche für die mit der Schiebehülse (11) in Eingriff gehaltene, als Spiralfeder (12) ausgebildete zweite Druckfeder aufweist.

5. Vorrichtung nach Anspruch 4, dadurch gekennzeichnet, dass die Schiebehülse (11) über schiefe Aussenflächen (11A) mit mindestens zwei im Dornkörper (7) federgefesselt geführten Klemmklötzen (14) in Eingriff gehalten ist.

6. Vorrichtung nach Anspruch 4, dadurch gekennzeichnet, dass die Schiebehülse (11) umfangsseitig durch mindestens zwei im Dornkörper (7) versenkt schwenkbare Übertragungshebel (15) mit mindestens zwei Klemmknaggen (15C) gekoppelt ist.

7. Vorrichtung nach Anspruch 6, dadurch gekennzeichnet, dass die Übertragungshebel (15) Aussenverrippungen (15B) zur axial verstellbaren Halterung der innenverrippten Klemmknaggen (15C) aufweisen.

8. Vorrichtung nach Anspruch 4, dadurch gekennzeichnet, dass der Schieber (16) eine den Trennkolben (18) abgedichtet durchdringende und im Anschlussflansch (2) endende Führungsstange (16A) mit Druckmittelkanal (16B, 21) bis unterhalb des Trennkolbens (18) aufweist und im Anschlussflansch (2) ein oberhalb des Trennkolbens (18) in den Aufnahmeraum für die Schiebehülse (11) mündender zweiter Druckmittelkanal (22) vorgesehen ist.

**Claims**

1. A device for picking up, transporting and measuring-out stacks of laminations for squirrel-cage rotors, consisting of centrally perforated individual sheets of a supply stack of laminations (4), which are aligned with a clean-edge, for loading a layer mandrel (6) for a clean-edged lamination stack for a machine, which laminations can be brought, pressed together, into a casting tool for the squirrel-cage, characterised in that a measuring-out mandrel (1), which as a result of its own weight can be plunged by means of a lifting device (3) into the supply stack of laminations, and which loaded with the latter can be placed on to the layer mandrel (6) by means of a mouthpiece (10) so as to be capable of being coupled in form-locking manner with a clean edge, is rotatably connected at the top to the lifting device (3) by means of its connection flange (2) and at its lower and region has at least two sunken rest members (8, 9) for the respective lowest individual sheet of the supply stack of laminations, which rest members can be commonly withdrawn in opposed fashion in a plane at right angles to the longitudinal axis of the mandrel, and in the axial interval above that, said measuring-out mandrel has at least two sunken clamping members (14, 15) for the superimposed remainder of the supply stack of laminations, which clamping members can be commonly extended outwards in a plane parallel thereto, and the locking and clamping members are respectively connected to adjusting elements (11, 16) which are arranged within the measuring-out mandrel and can each be independently operated from the outside.

2. A device as claimed in claim 1, characterised in that the adjusting element (16) for the rest members (8, 9) is guided for limited movement in the adjusting element (11) for the clamping members (14, 15), and the latter is guided for limited movement in the measuring-out mandrel (1), and the adjusting elements are coupled to their rest and clamping members in a form and/or force-locking manner.

3. A device as claimed in claim 1 or claim 2, characterised in that the adjusting elements (11, 16) are respectively guided so as to be axially displaceable and at their lower end faces engage with pressure springs (12, 17), which are supported in the measuring-out mandrel, and which support the unloaded adjusting elements in their upper end positions in which the rest members (8 9) and the clamping members (14, 15) protrude from the measuring-out mandrel (1).

4. A device as claimed in one of the preceding claims, characterised in that the measuring-out mandrel (1) consists of the mandrel body (7), which is closed at one end by the connection flange (2) and the mouthpiece (10), and which in its upper section has a cylindrical space, which is sealed by the detachably secured connection flange, to receive a displaceable separating piston (18), which is acted on by pressure means on both sides, and below that has a cylindrical component of the sliding sleeve (11), which is axially displaceable against its pressure spring (12) and in which below the separating piston (18), the piston-sharped slide (16), which is axially displaceable against its pressure spring (17), is arranged in sealed manner, which slide on its lower flattened side walls (16D) has obliquely arranged tooth wedges (8B, 9B) which are coupled to suitably obliquely directed tooth wedges (8B, 9B) on flat side walls (8A, 9A) of rest pins (8, 9), which are transversely displaceable in the lower section of the mandrel body (7), in a form and force-locking fashion; that the lower outer region of the sliding sleeve (11) is coupled to the clamping members (14, 15) in a form and force-locking fashion; and that below the rest pins (8, 9), the mouthpiece (10) is arranged, which guides the rest members and is detachably secured to the mandrel body (7) for rotation-resistant positioning on to the layer mandrel (6), which mouthpiece closes the receiving space for the sliding sleeve (11) and the slide (16) towards the bottom, and comprises the receiving space for the first pressure spring which is constructed as a spiral spring (17) and engages with the slide (16), and has a central end contact surface for the second pressure spring which is designed as a spiral spring (12) and is held in engagement with the sliding sleeve (11).

5. A device as claimed in claim 4, characterised in that the sliding sleeve (11) is held in engagement with at least two clamping blocks (10), which are guided in the mandrel body (7) in a spring-anchored manner by means of slanting outer surfaces (11A).

6. A device as claimed in claim 4, characterised in that, at the periphery, the sliding sleeve (11) is coupled to at least two clamping cams (15C) through at least two pivotable transmission levers (15) sunk in the mandrel body (7).

7. A device as claimed in claim 6, characterised in that the transmission levers (15) have external ribs (15B) for the axially adjustable support of the internally-ribbed clamping cams (15C).

8. A device as claimed in claim 4, characterised in that the slide (16) has a guide rod (16A) which passes through the separating piston (18) in sealed fashion and terminates in the connection flange (2), and which has a pressure means channel (16B, 21) to below the separating piston (18), and a second pressure means channel (22) provided in the connection flange (2), which opens into the receiving space for the sliding sleeve (11) above the separating piston (18).

## Revendications

1. Dispositif de préhension, de transport et de dosage pour des paquets de tôles pour des rotors en court-circuit, constitués par des tôles individuelles, à perçage central et à bords nets et alignés, d'une pile de tôles de réserve (4) pour garnir un mandrin d'empilage (6) pour un paquet de tôles à bords dressés pour une machine et susceptible d'être introduit, à l'état comprimé, dans un outil de coulée pour la cage d'écureuil, caractérisé par le fait qu'un mandrin de dosage (1), qui est susceptible, à l'aide d'un outil de levage (3), d'être enfoncé par son propre poids dans une pile de tôles de réserve, et qui est susceptible d'être placé avec ladite pile, et par l'intermédiaire d'un bec (10), sur le mandrin d'empilage (6) de manière à y être accouplé par formes complémentaires et avec des bords nets et dressés, est relié, du côté supérieur et par sa bride de liaison (2), à l'outil de levage (3) de manière à pouvoir tourner avec celui-ci, et comporte au niveau de sa partie d'extrémité inférieure au moins deux corps d'encliquetage (8, 9) encastrés et dégageables ensemble, en sens contraire l'un de l'autre, dans un plan perpendiculaire à l'axe longitudinal du mandrin, pour respectivement la tôle individuelle la plus basse de la pile de tôles de réserve, ainsi qu'axialement au-dessus de ces derniers, au moins deux corps de blocage escamotables (14, 15) dégageables en commun dans un plan parallèle auxdits corps, pour le reste, superposé, de la pile de tôles de réserve, les corps d'encliquetage et les corps de blocage étant respectivement accouplés avec des oranges de réglage (11, 16) disposés à l'intérieur du mandrin de dosage et dont chacun est susceptible d'être commandé de l'extérieur.

2. Dispositif selon la revendication 1, caractérisé par le fait que l'organe de réglage (16) pour les corps d'encliquetage (8, 9) est mobile suivant un mouvement limité dans l'organe de réglage (11) pour les corps de blocage (14, 15), et il en est de même pour ce dernier dans le mandrin de dosage (1), alors que les oranges de réglage sont accouplés avec leurs corps d'encliquetage ou de blocage par une liaison par transmission de forces et/ou par une liaison par formes complémentaires.

3. Dispositif selon la revendication 1 ou 2, caractérisé par le fait que les oranges de réglage (11, 16) sont respectivement guidés dans le sens axial et coagissent, à leurs côtés frontaux inférieurs, avec des ressorts de pression (12, 17) qui prennent appui dans le mandrin de dosage, lesdits ressorts de pression maintenant les organes de réglage déchargés dans leurs positions d'extrémité supérieures pour lesquelles les corps d'encliquetage (8, 9) et les corps de blocage (14, 15) débordent le mandrin de dosage (1).

4. Dispositif selon l'une des revendications précédentes, caractérisé par le fait que le mandrin de dosage (1) est constitué par le corps de mandrin (7) qui se termine sur un côté par la bride de liaison (2) et par le bec (10) et qui comporte, dans sa section supérieure, une chambre cylindrique qui est fermée par la bride terminale fixée de façon détachable et qui est destinée à recevoir un piston de séparation mobile (18) capable d'être chargé sur ses deux côtés par un milieu sous pression et, en-dessous, et mobile axialement à l'encontre de son ressort, une partie cylindrique d'une douille de poussée (11) dans laquelle est prévu, en-dessous du piston de séparation (18) et avec étanchéité, le poussoir (16), de la forme d'un piston et mobile axialement contre un ressort de pression (17), lequel poussoir comporte dans ses parois latérales inférieures et aplaties (16D), des dents cunéiformes et obliques (8B, 9B) qui sont accouplées à transmission de forces et par complémentarité de formes, avec des dents cunéiformes, obliques et correspondantes, prévues sur les parois latérales plates (8A, 9A) de chevilles d'encliquetage (8, 9) mobiles transversalement dans la section inférieure du corps de mandrin (7), que la partie extérieure et inférieure de la douille de poussée (11) est accouplée aux corps de blocage (14, 15) par complémentarité de formes et à transmission de forces, et qu'en-dessous des chevilles d'encliquetage (8, 9) est disposé le bec (10) qui guide les corps d'encliquetage et qui est fixé de façon détachable au corps de mandrin (7) pour son application, sans décalage angulaire possible, sur le mandrin d'empilage (6) qui ferme, vers le bas, la chambre de réception pour la douille de poussée (11) et pour le poussoir (16) et qui comporte la chambre de réception pour le premier ressort de pression qui coagit avec le poussoir (16) et qui est réalisée sous la forme d'un ressort hélicoïdal, ainsi qu'une surface d'appui frontale et centrée pour le second ressort de pression qui est maintenu en prise avec la douille de poussée et qui est réalisé sous la forme d'un ressort hélicoïdal.

5. Dispositif selon la revendication 4, caractérisé par le fait que la douille de poussée (11) est maintenue en prise, par l'intermédiaire de surfaces extérieures obliques (11A), avec au moins deux sabots de blocage (14) qui sont guidés, en étant assujettis à des ressorts, dans le corps de mandrin (7).

6. Dispositif selon la revendication 4, caractérisé par le fait que la douille de poussée (11) est accouplée, sur sa périphérie, par au moins deux leviers de transmission (15) articulés et escamotés dans le corps de mandrin (17) avec au moins deux taquets de blocage (15C).

7. Dispositif selon la revendication 6, caractérisé par le fait que les leviers de transmission (15) comportent des nervures extérieures (15B) pour le maintien, avec possibilité d'un décalage axial, des taquets de blocage (15C) qui sont pourvus de nervures intérieures.

8. Dispositif selon la revendication 4, caractérisé par le fait que le poussoir (16) comporte, jusqu'à en-dessous du piston de séparation (18), une tige de guidage (16A) à canal (16B, 21) pour le milieu sous pression, ladite tige de guidage traversant, avec étanchéité le piston de séparation (18) et se terminant dans le flasque de liaison (2), ainsi que, dans le flasque de liaison (2), un second canal à milieu sous pression (22) qui débouche, audessus du piston de séparation (18), dans la chambre de réception pour la douille de poussée (11).

FIG 1

FIG 2

FIG 3

FIG 4

FIG 5